# EUROPEAN PATENT SPECIFICATION

(11) **EP 4 140 890 B1**
(45) Date of publication and mention of the grant of the patent: **01.01.2025**
(21) Application number: 22203121.3
(22) Date of filing: 28.11.2019
(51) Int. Cl.: B64D 13/06, B64D 13/08, F25B 21/02

(54) **AIRCRAFT CABIN AIR THERMODYNAMIC CONTROL**
THERMODYNAMISCHE STEUERUNG DER FLUGZEUGKABINENLUFT
COMMANDE THERMODYNAMIQUE DE L'AIR DANS LA CABINE D'UN AVION

(30) Priority: 31.05.2019 US 201916427985
(43) Date of publication of application: 01.03.2023
(62) Divisional of application: 19212108.5
(73) Proprietor: Hamilton Sundstrand Corporation, Charlotte, NC 28217-4578 (US)
(72) Inventor: PEARSON, Matthew, Hartford, 06106 (US); ST. ROCK, Brian, Andover, 06232 (US)
(74) Representative: Dehns

(56) References cited:
- EP-A1- 3 330 181
- EP-A1- 3 381 808
- WO-A1-2009/122282
- US-A- 5 516 330
- US-A1- 2005 230 488
- US-A1- 2017 283 075

## Description

### BACKGROUND

Exemplary embodiments pertain to the art of thermodynamic control of aircraft cabin air. Aircraft include air handling systems for moderating temperature in aircraft cabins. US 5,516,330 related to an air conditioning system for a passenger aircraft. EP 3 330 181 relates to an air distribution manifold. US 2017/0283075 relates to an air treatment module.

### BRIEF DESCRIPTION

Disclosed is an aircraft including ductwork, as claimed in claim 1. The ductwork includes a fresh air intake disposed to draw air from offboard the aircraft. The ductwork includes a cabin recirculation vent disposed to draw air from an aircraft cabin. The ductwork includes a riser defining a return conduit disposed to convey air from the cabin recirculation vent and join the fresh air intake. The ductwork includes an overhead outlet vent connected to the riser and disposed to expel air into the cabin, the overhead outlet vent being connected to the riser downstream of where the riser joins the fresh air intake. The aircraft includes a thermoelectric heat pump having a first side and a second side, the first side in thermal contact with the return conduit that transfers heat to the second side upon application of an electrical input.

The aircraft further includes an exhaust defining an exhaust conduit joined with the ductwork and disposed to expel air from the aircraft cabin offboard the aircraft, and the second side is in thermal contact with the exhaust conduit and transfers heat to the exhaust conduit.

In addition to the features described above, further embodiments may include that the cabin recirculation vent is divided by the thermoelectric heat pump defining a riser vent portion associated with the riser and an exhaust vent portion associated with the exhaust.

In addition to one or more of the features described above, further embodiments may include a switch operable to complete a circuit associated with the thermoelectric heat pump. In addition to one or more of the features described above, or as an alternative, further embodiments may include an operations controller having stored instructions operable upon execution to operate the switch to complete the circuit such that the electrical input causes the first side to transfers heat to the second side.

In addition to one or more of the features described above, further embodiments may include that the switch is operated responsive to a temperature sensor indication falling below a selected temperature threshold corresponding to an environmental temperature associated with the cabin recirculation vent.

In addition to one or more of the features described above, further embodiments may include that an operations controller having stored instructions operable upon execution to operate a current controller associated with the thermoelectric heat pump such that current output from the operations controller is increased based on a temperature sensor indication increase corresponding to an environmental temperature associated with the cabin recirculation vent.

### BRIEF DESCRIPTION OF THE DRAWINGS

The following descriptions should not be considered limiting in any way. With reference to the accompanying drawings, like elements are numbered alike:
FIG. 1 is a schematic diagram of an aircraft air handling system including ductwork;
FIG. 2 is a perspective view of an aircraft cabin having vents for air ingress and egress;
FIG. 3 is a schematic diagram of a thermoelectric heat pump control system; and
FIG. 4 is a method for controlling aircraft cabin temperature.

### DETAILED DESCRIPTION

A detailed description of one or more embodiments of the disclosed apparatus and method are presented herein by way of exemplification and not limitation with reference to the Figures.

An aircraft may be configured to provide fresh air to the passenger cabin by displacing existing air in the cabin. The existing cabin air may be filtered and recirculated or exhausted out of the aircraft. As an example, half of the cabin air may be filtered and recirculated to the cabin, while the other half is discharged offboard the aircraft.

Fresh air may be mixed with the recirculated air to maintain proper quantities of air mass within the cabin and to provide sufficient supply of fresh air to maintain cabin atmosphere and comply with ventilation specifications. The mixed air may be temperature adjusted based on temperature settings of occupants near vents discharging the mixed air or sensors that detect the temperature of the cabin air. A thermoelectric heat pump may be configured to change a temperature of air within ductwork associated with the recirculated air and discharge the corresponding thermal energy to the exhaust ductwork.

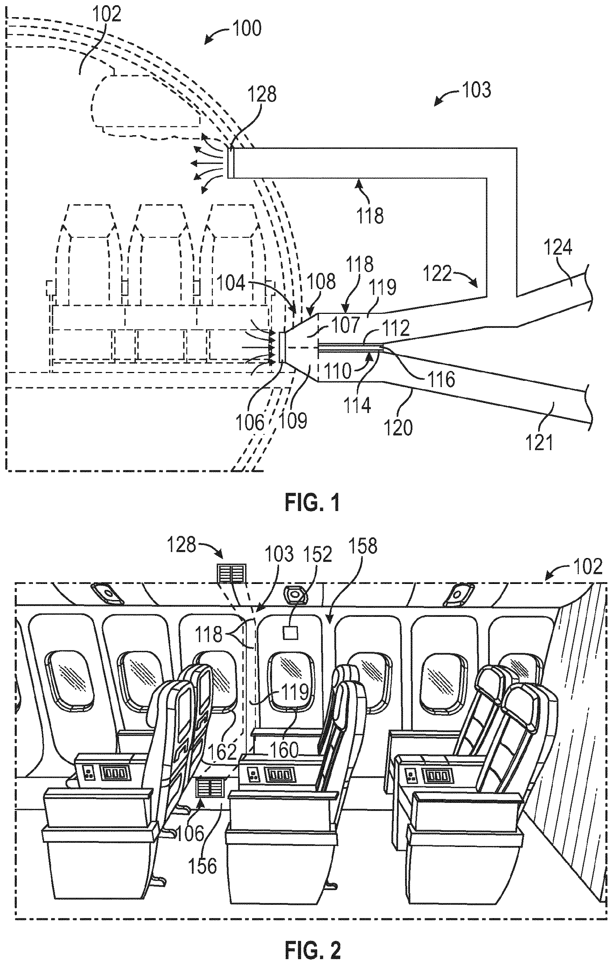

Referring to FIG. 1, an aircraft 100 is shown. The aircraft 100 includes an aircraft cabin 102. The aircraft cabin 102 may include any accessible area of the aircraft, including, as an example, the cockpit. The aircraft 100 includes ductwork 103 for handling air between ingress and egress points. The ductwork 103 includes a cabin recirculation vent 104. The cabin recirculation vent 104 may include an orifice 106 and associated ducting 108 for connecting with the ductwork 103. The ducting 108 may be divided by a thermoelectric heat pump 110 into a riser vent portion 107 and an exhaust vent portion 109. The cabin recirculation vent 104 is situated to draw air from the aircraft cabin 102. As an example, the cabin recirculation vent 104 may be situated near the dado panels 156 of the aircraft cabin 102. The dado panel 156 may be a lower portion of a sidewall of the aircraft cabin 102, as shown in FIG. 2. The cabin recirculation vent 104 is attached to a riser 118. The riser 118 directs air from the cabin recirculation vent 104 to junction or mixer 122. The mixer 122 combines fresh air from a fresh air intake 124 with the air from riser 118. The fresh air intake 124 draws air from offboard the aircraft 100.

It should be appreciated that any number of dampers, fans, or other air controllers may be used to alter the flow of air through the ductwork. An ejector or Venturi effect configuration may force air through one of the riser 118, fresh air intake 124, or exhaust 120. The air controllers may control air within the mixer such that 50% of the output air is recirculated air from the riser 118 and 50% of the output air is fresh air from the fresh air intake 124. The exhaust 120 air stream may be propelled by a positive pressure difference between the cabin and the outside environment. Air from the mixer 122 is directed to the overhead outlet vent 128 through riser 118 and recirculated throughout cabin 102.

It should be appreciated that the fresh air intake 124 or exhaust 120 may be disposed above, below, or among the cabin walls, floor, and ceiling. The fresh air intake 124 or exhaust 120 may be disposed beneath the cabin floor. The fresh air intake 124 or exhaust 120 may be disposed above the cabin.

The cabin recirculation vent 104 also dispenses air to an exhaust 120 that defines an exhaust conduit 121. Air controllers may be used to control flow among the riser 118 and the exhaust conduit 121. The riser 118 may define a return conduit 119, or portion thereof, for recirculation to the aircraft cabin 102. The air controllers may control air between the riser 118 and the exhaust conduit 121 such that 50% of mass flow from the cabin recirculation vent 104 travels through the return conduit 119 and 50% of mass flow from the cabin recirculation vent 104 travels through the exhaust conduit 121.

A thermoelectric heat pump 110 is provided and may be disposed near the cabin recirculation vent 104. The thermoelectric heat pump 110 may include any thermoelectric material. That is, any material that causes recognizable voltage based on a temperature differential. For example, the thermoelectric heat pump 110 may include semiconductor portion 116. The semiconductor portion 116 may be any type of semiconductor material. For example, the semiconductor portion 116 may include disparately doped silicon. The semiconductor portion 116 may be sandwiched by a first side 112 and a second side 114. The first side 112 is in thermal contact with the return conduit 119 such that heat energy is conducted between the first side 112 and the return conduit 119 or air within the return conduit 119. The second side 114 is in thermal contact with the exhaust conduit 121 such that heat energy is conducted between the second side 114 and the exhaust conduit 121 or air within the exhaust conduit 121. The riser 118 or exhaust 120 may be configured to provide counter flow to one another. That is, the riser 118 or the exhaust 120 may be configured in an S-shape or a U-shape to reduce temperature gradients across the thermoelectric heat pump 110 such that the flow of air across the first side 112 is opposite the flow of air across the second side 114. As such, air from the cabin recirculation vent 104 is divided with desired heating or cooling of the return conduit 119 air with undesirable thermal products being discarded with the exhaust conduit 121. It should be appreciated that any configuration, disposition, or orientation of the thermoelectric heat pump 110 may adjust the temperature of the return conduit 119 air, as long as it is within the scope of the claims. It should be appreciated that the thermoelectric heat pump 110 may be disposed above, below, or among the cabin walls, floor, and ceiling. It should be appreciated that FIG. 1 is not shown to scale and all of the associated ductwork 103 is located within, near, or around the fuselage. The present depiction is to improve clarity. It should be appreciated that a heat exchanger or radiator may be attached to either the first side 112 or the second side 114 to improve heat transfer.

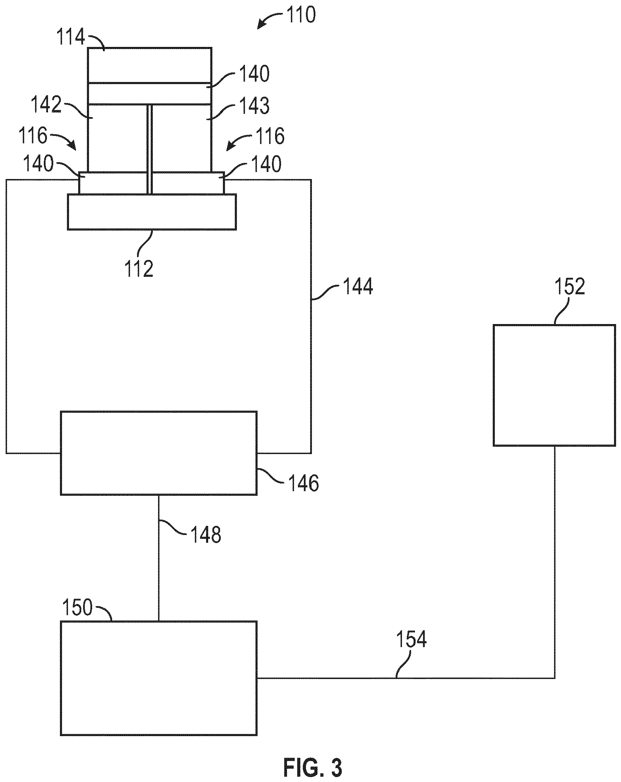

Referring to FIG. 2, an aircraft cabin 102 is shown. The aircraft cabin 102 includes a sidewall 158. The sidewall 158 may include a dado panel 156. The dado panel 156 may be situated on a lower half portion of the sidewall 158 or a portion thereof. The cabin recirculation vent 104 is disposed on the dado panel 156 drawing air from the cabin 102 to the riser 118 and into the return conduit 119. The riser 118 is positioned between the first window 160 and the second window 162. The riser 118 may also be positioned on a non-windowed portion of sidewall 158. The section of sidewall 158 may be associated with a temperature sensor 152. The temperature sensor 152 may provide a temperature sensor indication 154 (as shown in FIG. 3) of the environment or provide an environmental temperature of the surrounding aircraft cabin 102. The recirculated air travels through riser 118 and enters the cabin 102 through the overhead outlet vent 128. It should be appreciated that the cabin recirculation vent 104 and the overhead outlet vent 128 may be positioned anywhere within the cabin 102 or the aircraft 100.

Referring to FIG. 3, a schematic diagram of a thermoelectric heat pump 110 is shown. The thermoelectric heat pump 110 may include a semiconductor portion 116 sandwiched by a first side 112 and a second side 114. Conductive plates 140 may be disposed between the semiconductor portion 116 and the first side 112 and the second side 114, as shown. N-doped semiconductor material 142 and p-doped semiconductor material 143 may be placed between the conductive plates 140 to provide a serial conductive path 144 through the N-doped semiconductor material 142 and p-doped semiconductor material 143 material. The conductive path 144 serves as an electrical input to the thermoelectric heat pump 110 and forms a circuit.

The conductive path 144 may be controlled by current controller 146. The current controller 146 may include a switch. The current controller 146 may be an amplifier, operational amplifier, or otherwise disposed transistor configured to alter, multiply, or obstruct current flowing through conductive path 144. The current controller 146 may include a power source or be associated with an aircraft power source to energize the conductive path 144. The power source may be connected to an auxiliary bus of the aircraft. It should be appreciated that any type of current controller 146 may be used. Current controller 146 is operated by operations controller 150 through control channel 148. The control channel 148 may be digital or analog. The control channel 148 may include additional components (e.g., gate drivers) for operating the current controller 146.

The controllers 146, 150 may include any combination of processors, field programmable gate arrays (FPGA), or application specific integrated circuits (ASIC). The controller may include memory, volatile and non-volatile, operable to store machine instructions from the processors and other processing mechanisms to receive, calculate, and control devices, as necessary. Machine instructions may be stored (e.g., stored instructions, stored machine instructions, stored steps) in any language or representation, including but not limited to machine code, assembly instructions, C, C++, C#, PASCAL, COBAL, PYTHON, JAVA, and RUBY. It should be appreciated that any type of wired or wireless configuration is appreciated for any of the communications from the controller. Wireless protocols such as ZIGBEE, WI-FI, BLUETOOTH, or any other implement may be used. Communications may be realized through any protocol or medium known or unknown.

The operations controller 150 may receive a temperature sensor indication 154 from temperature sensor 152. The temperature sensor 152 may also be a temperature setting or request operated by an aircraft cabin 102 occupant. For example, the occupant may desire an increase or decrease in surrounding temperature and adjust the temperature through controls associated with the temperature sensor 152. The temperature sensor 152 may be any type of temperature sensing device including thermocouples and resistive thermal devices. The operations controller 150 may be configured to increase or decrease current output along the conductive path 144 from current controller 146 based on the temperature sensor indication 154. It should be appreciated that the temperature sensor indication 154 may be received wirelessly or from any number of wireless devices to properly control the thermoelectric heat pump. For example, ZIGBEE or BLUETOOTH devices may be dispersed throughout the aircraft 100 to send such signals.

As an example, the aircraft cabin 102 may have a temperature threshold or temperature setting of 21° C (70° F), if the cabin temperature increases to 22° C (71° F), the operations controller 150 may include stored instructions to operate the current controller 146 to increase current output along current path 144. As such, the thermoelectric heat pump will increase the cool (or heating) necessary to decrease (or increase) the temperature of air flowing through the return conduit 119. It should be appreciated that the first side 112 and the second side 114 may also include radiators that extend into the respective conduits.

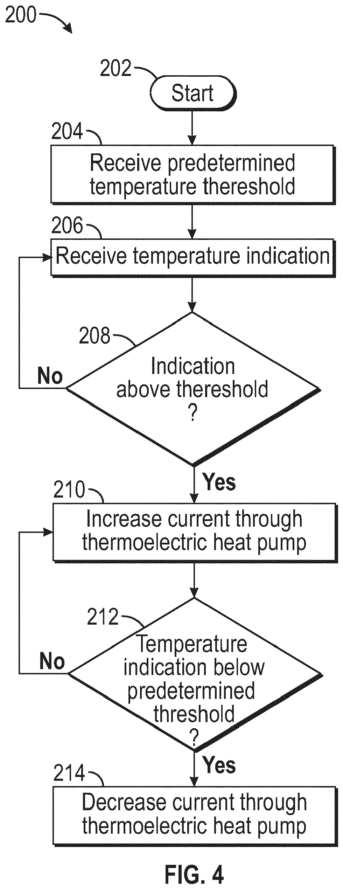

Referring to FIG. 4, a method 200 is shown. The method 200 begins in step 202. In step 204, a selected temperature threshold is received by the operations controller 150. The selected temperature threshold may be set by an occupant through a human interface, operable to enable a user to set a selected temperature threshold. The selected temperature threshold may be set wirelessly.

In step 206, the operations controller 150 receives a temperature sensor indication 154 from the temperature sensor 152. The temperature sensor indication 154 may be sent via wireless, wired, digital, or analog mediums. In step 208, if the temperature sensor indication 154 is different from the threshold the operations controller 150 may operate the thermoelectric heat pump 110 to properly adjust the temperature. For example, if the temperature is too high, the thermoelectric heat pump 110 may be operated to lower the temperature. If the temperature is too low, the thermoelectric heat pump 110 may be operated to raise the temperature.

For example, if the indication is above the threshold in step 208, the operations controller 150 may operate the current controller 146 to increase current through the thermoelectric heat pump 110 and direct the current in a proper direction such that cooling is provided to return conduit 119. In step 212, the operations controller 150 determines whether the temperature sensor indication 154 is less than the threshold such that the current can be adjusted in step 214 to reduce the temperature change from the thermoelectric heat pump 110. It should be appreciated that current may be increased depending on the disparity or rate of change of temperature against the threshold. These steps may be adjusted, omitted, rearranged, repeated, or otherwise follow any order or sequence to complete necessary functions.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but only by the scope of the claims.

## Claims

1. An aircraft comprising:
ductwork (103) including:
a fresh air intake (124) disposed to draw air from offboard the aircraft (100),
a cabin recirculation vent (104) disposed to draw air from an aircraft cabin (102),
a riser (118) defining a return conduit (119) disposed to convey air from the cabin recirculation vent (104) and join the fresh air intake (124), and
an overhead outlet vent (128) connected to the riser (118) and disposed to expel air into the cabin (102), the overhead outlet vent (128) being connected to the riser (118) downstream of where the riser (118) joins the fresh air intake (124),
**characterized by**
a thermoelectric heat pump (110) having a first side (112) and a second side (114), the first side (112) in thermal contact with the return conduit (119) that transfers heat to the second side (114) upon application of an electrical input; and
an exhaust (120) defining an exhaust conduit (121) joined with the ductwork and disposed to expel air from the aircraft cabin (102) offboard the aircraft (100), and the second side (114) is in thermal contact with the exhaust conduit (121) and transfers heat to the exhaust conduit (121).

2. The aircraft of claim 1, wherein the cabin recirculation vent (104) is divided by the thermoelectric heat pump (110) defining a riser vent portion associated with the riser and an exhaust vent portion associated with the exhaust.

3. The aircraft of any preceding claim, further comprising:
a switch operable to complete a circuit associated with the thermoelectric heat pump; and
an operations controller (150) having stored instructions operable upon execution to operate the switch to complete the circuit such that the electrical input causes the first side to transfers heat to the second side.

4. The aircraft of claim 3, wherein the switch is operated responsive to a temperature sensor indication falling above a selected temperature threshold corresponding to an environmental temperature associated with the cabin recirculation vent.

5. The aircraft of any of any preceding claim, further comprising an operations controller (150) having stored instructions operable upon execution to operate a current controller associated with the thermoelectric heat pump such that current output from the operations controller is increased based on a temperature sensor indication increase corresponding to an environmental temperature associated with the cabin recirculation vent.

## Patentansprüche

1. Flugzeug, das Folgendes umfasst:
ein Kanalsystem (103), das Folgendes beinhaltet:
einen Frischlufteinlass (124), der angeordnet ist, um Luft von außerhalb des Flugzeugs (100) anzusaugen,
eine Kabinenumwälzöffnung (104), die angeordnet ist, um Luft aus einer Flugzeugkabine (102) anzusaugen,
eine Steigleitung (118), die eine Rückführleitung (119) definiert, die angeordnet ist, um Luft von der Kabinenumwälzöffnung (104) zu fördern und an den Frischlufteinlass (124) anzuschließen, und
eine oben liegende Auslassöffnung (128), die mit der Steigleitung (118) verbunden und angeordnet ist, um Luft in die Kabine (102) auszustoßen, wobei die oben liegende Auslassöffnung (128) mit der Steigleitung (118) stromabwärts von der Stelle verbunden ist, an der die Steigleitung (118) an den Frischlufteinlass (124) anschließt, **gekennzeichnet durch**
eine thermoelektrische Wärmepumpe (110), die eine erste Seite (112) und eine zweite Seite (114) aufweist, wobei die erste Seite (112) in Thermokontakt mit der Rückführleitung (119) steht, die bei Anlegen einer elektrischen Eingabe Wärme zu der zweiten Seite (114) überträgt; und
einen Auslass (120), der eine Auslassleitung (121) definiert, die an das Kanalsystem angeschlossen und angeordnet ist, um Luft aus der Flugzeugkabine (102) außerhalb des Flugzeugs (100) auszustoßen, und die zweite Seite (114) in Thermokontakt mit der Auslassleitung (121) steht und Wärme zu der Auslassleitung (121) überträgt.

2. Flugzeug nach Anspruch 1, wobei die Kabinenumwälzöffnung (104) durch die thermoelektrische Wärmepumpe (110) geteilt ist, die einen Steigleitungsentlüftungsabschnitt, der mit der Steigleitung assoziiert ist, und einen Auslassentlüftungsabschnitt, der mit dem Auslass assoziiert ist, definiert.

3. Flugzeug nach einem der vorstehenden Ansprüche, das ferner Folgendes umfasst:
einen Schalter, der betätigbar ist, um einen Schaltkreis, der mit der thermoelektrischen Wärmepumpe assoziiert ist, zu schließen; und
einen Betriebscontroller (150), der gespeicherte Anweisungen aufweist, die bei Ausführung betreibbar sind, um den Schalter zu betätigen, um den Schaltkreis derart zu schließen, dass die elektrische Eingabe die erste Seite veranlasst, Wärme zu der zweiten Seite zu übertragen.

4. Flugzeug nach Anspruch 3, wobei der Schalter als Reaktion darauf betrieben wird, dass eine Angabe eines Temperatursensors über einen ausgewählten Temperaturschwellenwert fällt, der einer Umgebungstemperatur entspricht, die mit der Kabinenumwälzöffnung assoziiert ist.

5. Flugzeug nach einem der vorstehenden Ansprüche, das einen Betriebscontroller (150) umfasst, der gespeicherte Anweisungen aufweist, die bei Ausführung betreibbar sind, um einen Stromcontroller zu betreiben, der mit der thermoelektrischen Wärmepumpe derart assoziiert ist, dass die Stromausgabe von dem Betriebscontroller basierend auf einer Erhöhung der Temperatursensorangabe, die einer Umgebungstemperatur entspricht, die mit der Kabinenumwälzöffnung assoziiert ist, erhöht wird.

## Revendications

1. Aéronef comprenant :
une canalisation (103) comportant :
une prise d'air frais (124) disposée pour prélever l'air depuis l'extérieur de l'aéronef (100),
un évent de recirculation de cabine (104) disposé pour prélever l'air d'une cabine d'aéronef (102),
une colonne montante (118) définissant un conduit de retour (119) disposé pour transporter l'air depuis l'évent de recirculation de cabine (104) et rejoindre la prise d'air frais (124), et
un évent de sortie aérien (128) relié à la colonne montante (118) et disposé pour expulser l'air dans la cabine (102), l'évent de sortie aérien (128) étant relié à la colonne montante (118) en aval de l'endroit où la colonne montante (118) rejoint la prise d'air frais (124), **caractérisé par**
une pompe à chaleur thermoélectrique (110) ayant un premier côté (112) et un second côté (114), le premier côté (112) étant en contact thermique avec le conduit de retour (119) qui transfère la chaleur au second côté (114) lors de l'application d'une entrée électrique ; et
un échappement (120) définissant un conduit d'échappement (121) relié à la canalisation et disposé pour expulser l'air de la cabine d'aéronef (102) à l'extérieur de l'aéronef (100), et le second côté (114) est en contact thermique avec le conduit d'échappement (121) et transfère de la chaleur au conduit d'échappement (121).

2. Aéronef selon la revendication 1, dans lequel l'évent de recirculation de cabine (104) est divisé par la pompe à chaleur thermoélectrique (110) définissant une partie d'évent de colonne montante associée à la colonne montante et une partie d'évent d'échappement associée à l'échappement.

3. Aéronef selon une quelconque revendication précédente, comprenant également :
un commutateur pouvant fonctionner pour terminer un circuit associé à la pompe à chaleur thermoélectrique ; et
un dispositif de commande de fonctionnement (150) ayant des instructions stockées utilisables lors de l'exécution pour actionner le commutateur afin de terminer le circuit de sorte que l'entrée électrique amène le premier côté à transférer de la chaleur au second côté.

4. Aéronef selon la revendication 3, dans lequel le commutateur est actionné en réponse à une indication de capteur de température tombant au-dessus d'un seuil de température sélectionné correspondant à une température ambiante associée à l'évent de recirculation de cabine.

5. Aéronef selon une quelconque revendication précédente, comprenant également un dispositif de commande d'opérations (150) ayant des instructions stockées utilisables lors de l'exécution pour faire fonctionner un dispositif de commande de courant associé à la pompe à chaleur thermoélectrique de sorte que la sortie de courant du dispositif de commande d'opérations est augmentée sur la base d'une augmentation d'indication de capteur de température correspondant à une température ambiante associée à l'évent de recirculation de cabine.
